# EUROPEAN PATENT APPLICATION

(11) **EP 4 683 098 A1**
(43) Date of publication of application: **21.01.2026**
(21) Application number: 23962046.1
(22) Date of filing: 25.12.2023
(51) Int. Cl.: H01M 50/533

(54) **BATTERY CELL, LITHIUM ION BATTERY MANUFACTURING METHOD, AND LITHIUM ION BATTERY**

(30) Priority: 19.12.2023 CN 202311759379
(71) Applicant: Huizhou Liwinon New Energy Technology Co., Ltd., Huizhou, Guangdong 516100 (CN)
(72) Inventor: HOU, Yongxuan, Huizhou, Guangdong 516100 (CN); WANG, Hao, Huizhou, Guangdong 516100 (CN); YU, Zilong, Huizhou, Guangdong 516100 (CN); CHEN, Jie, Huizhou, Guangdong 516100 (CN); WANG, Xiuqiang, Huizhou, Guangdong 516100 (CN); YANG, Shan, Huizhou, Guangdong 516100 (CN); LI, Zaibo, Huizhou, Guangdong 516100 (CN)
(74) Representative: Primiceri, Maria Vittoria
(86) International application number: PCT/CN2023/141584
(87) International publication number: WO 2025/129724

(57) **Abstract**

The present application discloses a battery cell, a lithium ion battery manufacturing method, and a lithium ion battery. The battery cell comprises a body and tab assemblies; each tab assembly comprises a dummy tab group, an outer tab, and a tab adhesive; the dummy tab group comprises at least one dummy tab connected to the body; the outer tab is conductively connected to the dummy tab group; in a projection in the thickness direction of the body, the outer tab and the dummy tab group partially overlap to form an overlapping portion, and the tab adhesive is wrapped around at least part of the overlapping portion; two tab assemblies are provided, and the two tab assemblies are staggered in the width direction of the body. The distance between the tab adhesives and the body is closer, the dummy tabs do not need to be folded, and a top sealing process step is directly performed at the positions of the tab adhesives after the battery cell is placed into a packaging housing, so that the space occupied by the tab assemblies between the body and the top sealing positions can be reduced, improving the energy density of the lithium ion battery, and the production steps of the lithium ion battery can be simplified, improving the production efficiency of the lithium ion battery.

## Description

### TECHNICAL FIELD

The present disclosure relates to the technical field of lithium-ion batteries, and in particular, to a battery cell, a manufacturing method of a lithium-ion battery, and a lithium-ion battery.

### BACKGROUND

Lithium-ion batteries are widely used in 3C digital products such as mobile phones, power banks, and smart wearables, and in fields like solar street light energy storage and new energy vehicle power batteries, owing to advantages of high specific energy, low self-discharge, light weight, and environmental friendliness. A battery cell of the lithium-ion battery has gained wide application due to a high charge rate thereof. A plurality of dummy tabs are connected to a body of the battery cell. During manufacturing, the plurality of dummy tabs need to be pre-welded first, and then an outer tab is welded to the dummy tabs. Finally, the battery cell is placed into a packaging case such that the body and the dummy tabs are located inside the packaging case, while a part of the outer tab extends outside the packaging case. In the lithium-ion battery formed by the foregoing method, the dummy tabs occupy large space, resulting in a low energy density. To reduce the space occupied by the dummy tabs, the dummy tabs can be folded before the battery cell is placed into the case. However, this increases manufacturing steps for the lithium-ion battery, leading to low manufacturing efficiency. In addition, folded dummy tabs still occupy some space in the lithium-ion battery, resulting in a low energy density.

### SUMMARY

The present disclosure aims to resolve at least one of technical problems in the prior art. Based on this, the present disclosure provides a battery cell. This can not only reduce space occupied by a tab assembly between a body and a top sealing position, to increase an energy density of a lithium-ion battery, but also simplify manufacturing steps for the lithium-ion battery, to improve manufacturing efficiency of the lithium-ion battery.

The present disclosure further provides a manufacturing method of the lithium-ion battery used for manufacturing a lithium-ion battery including the battery cell described above.

The present disclosure further provides a lithium-ion battery including the battery cell described above.

An embodiment of the first aspect of the present disclosure provides a battery cell, including:
a body; and
a tab assembly, including a dummy tab group, an outer tab, and a tab adhesive, where the dummy tab group includes at least one dummy tab connected to the body, the outer tab is electrically connected to the dummy tab group, in a projection along a thickness direction of the body, the outer tab and the dummy tab group partially overlap to form an overlapping portion, the tab adhesive wraps around at least part of the overlapping portion, two tab assemblies are provided, and the two tab assemblies are arranged in a staggered manner along a width direction of the body.

The battery cell according to the embodiment of the first aspect of the present disclosure has at least the following beneficial effects:
In the battery cell according to the embodiment of the first aspect of the present disclosure, the tab adhesive wraps around the overlapping portion formed by overlapping the outer tab and the dummy tab group. In comparison with the related art where the tab adhesive is arranged on the outer tab, the tab adhesive in the battery cell according to the embodiment of the first aspect of the present disclosure is located closer to the body. When the battery cell according to the embodiment of the first aspect of the present disclosure is used in a lithium-ion battery, there is no need to fold the dummy tab. After the battery cell is placed into a packaging case, a top sealing process can be performed directly at a position of the tab adhesive. This can not only reduce space occupied by the tab assembly between the body and a top sealing position, to increase an energy density of the lithium-ion battery, but also simplify manufacturing steps for the lithium-ion battery, to improve manufacturing efficiency of the lithium-ion battery.

In some embodiments of the present disclosure, the tab adhesive includes a first adhesive sheet and a second adhesive sheet, the first adhesive sheet and the second adhesive sheet are respectively arranged on two sides of the overlapping portion along a thickness direction, and the first adhesive sheet and the second adhesive sheet are adhered to each other on two sides of the overlapping portion along a width direction.

In some embodiments of the present disclosure, an end of the first adhesive sheet along a length direction of the overlapping portion is adhered to one side of the outer tab along the thickness direction of the overlapping portion, and an end of the second adhesive sheet along the length direction of the overlapping portion is adhered to the other side of the outer tab along the thickness direction of the overlapping portion.

In some embodiments of the present disclosure, the tab adhesive is of an integrated structure.

In some embodiments of the present disclosure, the tab adhesive wraps around an end of the dummy tab group away from the body.

In some embodiments of the present disclosure, the dummy tab group includes a plurality of dummy tabs, and the plurality of dummy tabs are sequentially arranged along the thickness direction of the body.

In some embodiments of the present disclosure, the body includes a first electrode sheet and a second electrode sheet, and the first electrode sheet and the second electrode sheet are laminated and wound, where the dummy tab in one dummy tab group is connected to the first electrode sheet, and the dummy tab in another dummy tab group is connected to the second electrode sheet.

In some embodiments of the present disclosure, the body includes a plurality of first electrode sheets and a plurality of second electrode sheets, and the plurality of first electrode sheets and the plurality of second electrode sheets are alternately laminated, where a plurality of dummy tabs in one dummy tab group are connected to the plurality of first electrode sheets in one-to-one correspondence, and a plurality of dummy tabs in another dummy tab group are connected to the plurality of second electrode sheets in one-to-one correspondence.

In some embodiments of the present disclosure, a dimension of the tab adhesive along a length direction of the body is from 0.5 mm to 10 mm;
and/or
a dimension of the tab adhesive along the width direction of the body is from 1 mm to 25 mm;
   and/or
a dimension of the tab adhesive along the thickness direction of the body is from 0.002 mm to 0.5 mm

An embodiment of the second aspect of the present disclosure provides a manufacturing method of the lithium-ion battery, used for manufacturing a lithium-ion battery including the multi-tab battery according to any embodiment of the first aspect of the present disclosure. The manufacturing method of the lithium-ion battery includes steps of:
obtaining or preparing a combination of a body and a dummy tab group;
partially overlapping an outer tab and the dummy tab group along a thickness direction of the body to form an overlapping portion;
welding the outer tab to a plurality of dummy tabs in the dummy tab group;
preparing a tab adhesive on the overlapping portion, to form the battery cell; and
obtaining or preparing a packaging case, and placing the battery cell into the packaging case, such that the tab adhesive is sandwiched between two cases of the packaging case.

The manufacturing method of the lithium-ion battery according to the embodiment of the second aspect of the present disclosure has at least the following beneficial effects:
In the manufacturing method of the lithium-ion battery according to the embodiment of the second aspect of the present disclosure, the battery cell according to the embodiment of the first aspect of the present disclosure is first prepared, and the tab adhesive wraps around the overlapping portion formed by overlapping the outer tab and the dummy tab group. In comparison with the related art where the tab adhesive is arranged on the outer tab, the tab adhesive in the battery cell according to the embodiment of the first aspect of the present disclosure is located closer to the body. After the battery cell is prepared, there is no need to fold the dummy tabs. After the battery cell is placed into the packaging case, manufacturing of the lithium-ion battery can be completed by directly performing a top sealing process at a position of the tab adhesive. In one aspect, a tab assembly occupies small space between the body and a top sealing area, which can increase an energy density of the lithium-ion battery. In another aspect, manufacturing steps for the lithium-ion battery are simple, which improves manufacturing efficiency of the lithium-ion battery.

In some embodiments of the present disclosure, preparing a tab adhesive on the overlapping portion includes a step of:
after welding the outer tab to the plurality of dummy tabs in the dummy tab group, placing the overlapping portion into an injection mold, and injecting a plastic material into the injection mold and solidifying the plastic material to form the tab adhesive wrapping around the overlapping portion.

In some embodiments of the present disclosure, preparing a tab adhesive on the overlapping portion includes steps of:
obtaining or preparing a first adhesive sheet and a second adhesive sheet; and
after welding the outer tab to the plurality of dummy tabs in the dummy tab group, adhering the first adhesive sheet to one side of the overlapping portion along a thickness direction, adhering the second adhesive sheet to the other side of the overlapping portion along the thickness direction, and adhering the first adhesive sheet and the second adhesive sheet to each other on two sides of the overlapping portion along a width direction.

In some embodiments of the present disclosure, preparing a tab adhesive on the overlapping portion includes steps of:
obtaining or preparing a first adhesive sheet and a second adhesive sheet; and
the outer tab includes an exposed area, a pre-adhesion area, and a welding area sequentially connected along a length direction of the outer tab, adhering one end of the first adhesive sheet to one side of the pre-adhesion area along a thickness direction, such that the remaining part of the first adhesive sheet is located on one side of the pre-adhesion area close to the welding area and separated from the welding area, and adhering one end of the second adhesive sheet to the other side of the pre-adhesion area along the thickness direction, such that the remaining part of the second adhesive sheet is located on the side of the pre-adhesion area close to the welding area and separated from the welding area;
partially overlapping an outer tab and the dummy tab group along a thickness direction of the body to form an overlapping portion includes a step of: overlapping the welding area and the dummy tab group along the thickness direction of the body to form the overlapping portion; and
welding the outer tab to a plurality of dummy tabs in the dummy tab group includes steps of: welding the welding area to the plurality of dummy tabs in the dummy tab group; and
after welding the welding area to the plurality of dummy tabs in the dummy tab group, adhering remaining part of the first adhesive sheet to one side of the overlapping portion, adhering remaining part of the second adhesive sheet to the other side of the overlapping portion, and adhering the first adhesive sheet and the second adhesive sheet to each other on two sides of the overlapping portion along a width direction.

In some embodiments of the present disclosure, adhering remaining part of the first adhesive sheet to one side of the overlapping portion, adhering remaining part of the second adhesive sheet to the other side of the overlapping portion, and adhering the first adhesive sheet and the second adhesive sheet to each other on two sides of the overlapping portion along a width direction includes steps of:
causing a pushing member to contact one side of the first adhesive sheet away from the outer tab;
causing the pushing member to contact one side of the second adhesive sheet away from the outer tab; and
causing the pushing member to move along a direction from the pre-adhesion area toward the welding area, to push the remaining part of the first adhesive sheet to be adhered to the one side of the overlapping portion, and push the remaining part of the second adhesive sheet to be adhered to the other side of the overlapping portion, and causing the first adhesive sheet and the second adhesive sheet to be adhered to each other on the two sides of the overlapping portion along the width direction.

In some embodiments of the present disclosure, welding the outer tab to a plurality of dummy tabs in the dummy tab group includes a step of:
welding the outer tab to the plurality of dummy tabs in the dummy tab group by laser welding or ultrasonic welding.

An embodiment of the third aspect of the present disclosure provides a lithium-ion battery, including:
a packaging case, including two cases that are interlocked, where the two cases define an accommodation cavity; and
the battery cell according to any embodiment of the first aspect of the present disclosure, where the body is accommodated in the accommodation cavity, the tab adhesive is sandwiched between the two cases, and a part of the outer tab extends to the outside of the packaging case.

The lithium-ion battery according to the embodiment of the third aspect of the present disclosure has at least the following beneficial effects:
The lithium-ion battery according to the embodiment of the third aspect of the present disclosure includes the battery cell according to the embodiment of the first aspect of the present disclosure. In the battery cell, the tab adhesive wraps around an overlapping portion formed by overlapping the outer tab and a dummy tab group. In comparison with the related art where the tab adhesive is arranged on the outer tab, the tab adhesive in the battery cell according to the embodiment of the first aspect of the present disclosure is located closer to the body. In a manufacturing process of the lithium-ion battery according to the embodiment of the third aspect of the present disclosure, there is no need to fold a dummy tab. After the battery cell is placed into the packaging case, a top sealing process at a position of the tab adhesive is directly performed. This can not only reduce space occupied by a tab assembly between the body and a top sealing area, to increase an energy density of the lithium-ion battery, but also simplify manufacturing steps for the lithium-ion battery, to improve manufacturing efficiency of the lithium-ion battery.

Additional aspects and advantages of the present disclosure are given in part in the following description, part of which become apparent from the following description, or are learned from practices of the present disclosure.

### BRIEF DESCRIPTION OF THE DRAWINGS

The present disclosure is further described below with reference to accompanying drawings and embodiments, where:
FIG. 1 is schematic diagram of a lithium-ion battery in the related art;
FIG. 2 is a front view of a lithium-ion battery according to some embodiments of the third aspect of the present disclosure, which includes a battery cell according to some embodiments of the first aspect of the present disclosure;
FIG. 3 is a schematic diagram of a body, a dummy tab group, and an outer tab of the battery cell shown in FIG. 2;
FIG. 4 is a schematic diagram of a body, a dummy tab group, an outer tab, and a tab adhesive of the battery cell shown in FIG. 2;
FIG. 5 is a schematic diagram of the body, the dummy tab group, the outer tab, and the tab adhesive of the battery cell shown in FIG. 4 assembled with a packaging case;
FIG. 6 is a schematic diagram of a body, a dummy tab group, an outer tab, and a tab adhesive of a battery cell according to some other embodiments of the first aspect of the present disclosure;
FIG. 7 is a cross-sectional view taken along line A-A after the body, the dummy tab group, the outer tab, and the tab adhesive of the battery cell shown in FIG 6 is assembled with a packaging case;
FIG. 8 is a schematic diagram of a body, a dummy tab group, an outer tab, and a tab adhesive of a battery cell according to still some other embodiments of the first aspect of the present disclosure;
FIG. 9 is a cross-sectional view taken along line B-B after the body, the dummy tab group, the outer tab, and the tab adhesive of the battery cell shown in FIG. 8 are assembled with a packaging case;
FIG. 10 is a schematic flowchart of a manufacturing method of the lithium-ion battery according to some embodiments of the second aspect of the present disclosure;
FIG. 11 is a schematic diagram of a battery cell after completion of step S450 in a manufacturing method of the lithium-ion battery according to some embodiments of the second aspect of the present disclosure; and
FIG. 12 is a side view of the battery cell shown in FIG. 11.

Reference numerals:
battery cell 100, 100'; body 110, 110'; first electrode sheet 111; second electrode sheet 112; tab assembly 120, 120'; dummy tab group 121, 121'; dummy tab 1211; outer tab 122, 122'; exposed area 1221; pre-adhesion area 1222; welding area 1223; tab adhesive 123, 123'; first adhesive sheet 1231; second adhesive sheet 1232; overlapping portion 124; packaging case 200, 200'; case 210, 210'; and pushing member 300.

### DETAILED DESCRIPTION

Embodiments of the present disclosure will be described in detail hereinafter in conjunction with accompanying drawings in which the same or like reference numerals refer to the same or like elements or elements having the same or like functions throughout. The embodiments described below by reference to the accompanying drawings are illustrative and are intended for illustrating only and are not to be construed as limiting the present disclosure.

In the description of the present disclosure, it should be understood that for the description of orientations, the orientation or positional relationships indicated by the terms such as "up," "down," "left," "right" and the like are based on orientation or positional relationships shown in the accompanying drawings, and are used only for ease and brevity of illustration and description, rather than indicating or implying that the mentioned apparatus or element must have a particular orientation or must be constructed and operated in a particular orientation. Therefore, such terms should not be construed as limiting of the present disclosure.

In the description of the present disclosure, unless otherwise explicitly defined, the terms such as "configure," "install/mount" and "connect" should be understood in a broad sense, and those having ordinary skills in the art can reasonably determine the specific meanings of the above terms in the present disclosure based on the specific contents of the technical scheme.

In the description of the specification, the description with reference to the terms "an embodiment," "some embodiments and so on means that specific features, structures, materials or characteristics described in connection with the embodiment or example are embraced in at least one embodiment or example of the present disclosure. In this specification, exemplary descriptions of the foregoing terms do not necessarily refer to the same embodiment or example. Moreover, the described specific features, structures, materials, or characteristics can be combined in any suitable manner in one or more embodiments.

Lithium-ion batteries are widely used in 3C digital products such as mobile phones, power banks, and smart wearables, and in fields like solar street light energy storage and new energy vehicle power batteries, owing to advantages of high specific energy, low self-discharge, light weight, and environmental friendliness. A battery cell 100 of the lithium-ion battery has gained wide application due to a high charge rate thereof. A plurality of dummy tabs are connected to a body 110 of the battery cell 100. During manufacturing, the plurality of dummy tabs need to be pre-welded first, and then an outer tab is welded to the dummy tabs. Finally, the battery cell 100 is placed into a packaging case such that the body 110 and the dummy tabs are located inside the packaging case, while a portion of the outer tab extends outside the packaging case.

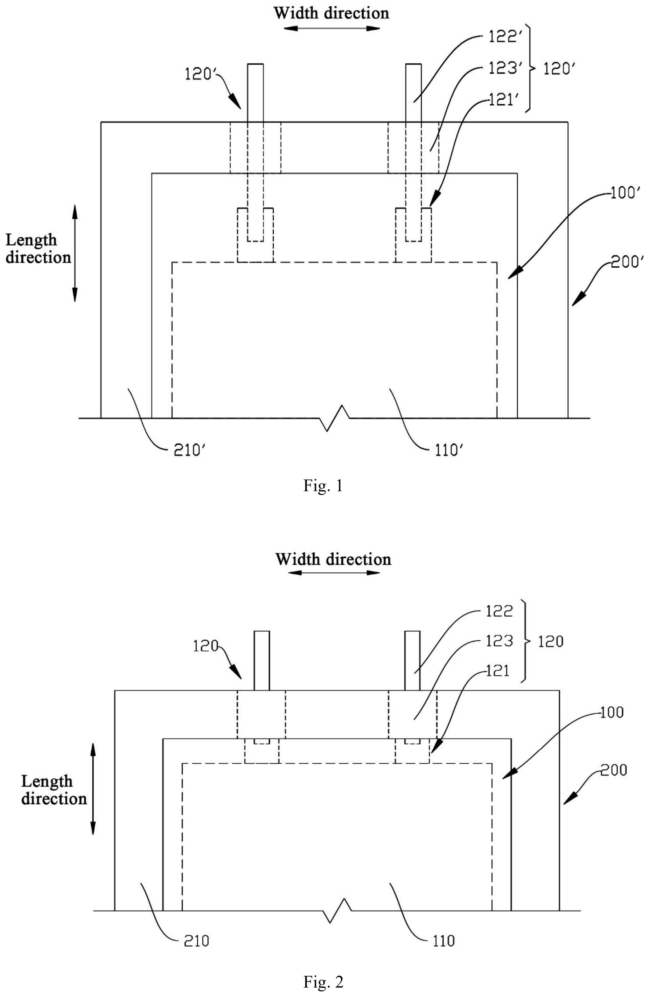

With reference to FIG. 1, a case 210' is shown as transparent to more clearly reveal a structure of a battery cell 100' in the related art. In a tab assembly 120' of the battery cell 100', a tab adhesive 123' is arranged on an outer tab 122', the outer tab 122' is welded to a dummy tab group 121', and the tab adhesive 123' is spaced apart from the dummy tab group 121' along a length direction of the outer tab 122'. After the battery cell 100' is placed into a packaging case 200', the tab adhesive 123' is sandwiched between two cases 210' of the packaging case 200', and then a top sealing process is performed on an edge where the tab adhesive 123' is located, thereby forming a hermetic seal among the two cases 210' and the tab adhesive 123'. Because a distance exists between the tab adhesive 123' and the dummy tab group 121', the dummy tab group 121' occupies large space between a body 110' and the tab adhesive 123', resulting in a low energy density for the lithium-ion battery. To reduce the space occupied by the dummy tab group 121', the dummy tab group 121' can be folded before the battery cell 100' is placed into the case. However, this increases manufacturing steps for the lithium-ion battery, leading to low manufacturing efficiency. In addition, a folded dummy tab group 121' still occupy some space in the lithium-ion battery, resulting in a low energy density.

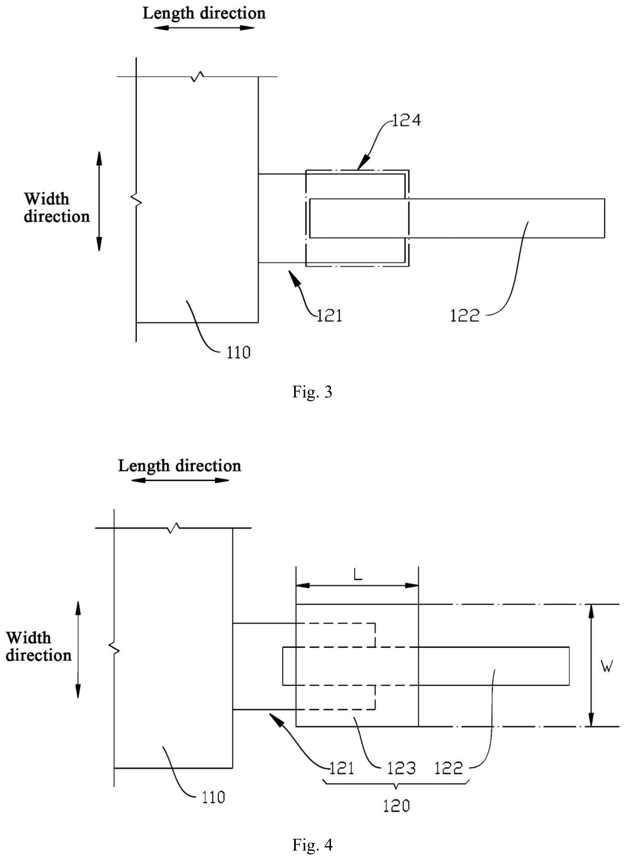

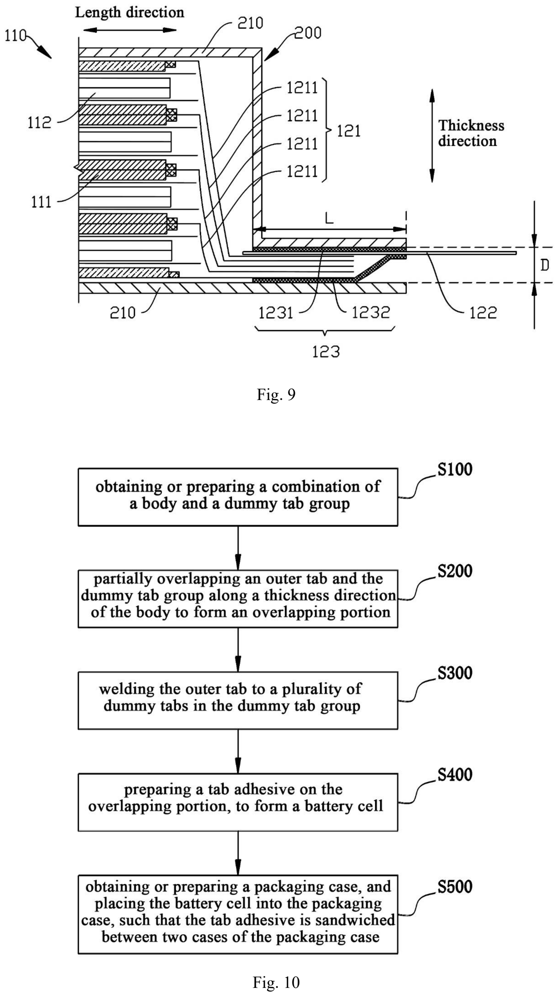

Based on this, with reference to FIG. 2, a case 210 is shown as transparent to more clearly reveal a structure of a battery cell 100 according to an embodiment of a first aspect of the present disclosure. The battery cell 100 according to the embodiment of the first aspect of the present disclosure includes a body 110 and a tab assembly 120, two tab assemblies 120 are provided, and the two tab assemblies 120 are arranged in a staggered manner along a width direction of the body 110. With reference to FIG. 4 and FIG. 9, the tab assembly 120 includes a dummy tab group 121, an outer tab 122, and a tab adhesive 123, where the dummy tab group 121 includes at least one dummy tab 1211 connected to the body 110, and the outer tab 122 is electrically connected to the dummy tab group 121. With reference to FIG. 3, in a projection along a thickness direction of the body 110, the outer tab 122 and the dummy tab group 121 partially overlap to form an overlapping portion 124, and the tab adhesive 123 wraps around at least part of the overlapping portion 124.

In the battery cell 100 according to the embodiment of the first aspect of the present disclosure, the tab adhesive 123 wraps around the overlapping portion 124 formed by overlapping the outer tab 122 and the dummy tab group 121. In comparison with the related art where the tab adhesive 123 is arranged on the outer tab 122, the tab adhesive 123 in the battery cell 100 according to the embodiment of the first aspect of the present disclosure is located closer to the body 110. When the battery cell 100 is used in a lithium-ion battery, there is no need to fold the dummy tab 1211 during a manufacturing process. After the battery cell 100 is placed into a packaging case 200, a top sealing process can be performed directly at a position of the tab adhesive 123. This can not only reduce space occupied by the tab assembly 120 between the body 110 and a top sealing position, to increase an energy density of the lithium-ion battery, but also simplify manufacturing steps for the lithium-ion battery, to improve manufacturing efficiency of the lithium-ion battery.

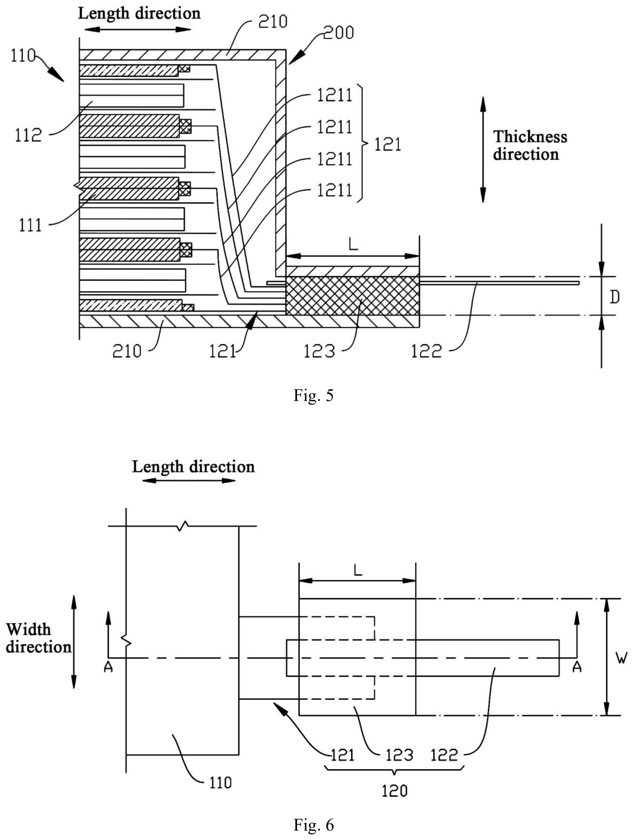

The tab adhesive 123 can have various structural forms. For example, in some embodiments, with reference to FIG. 4 and FIG. 5, the tab adhesive 123 is of an integrated structure, and the tab adhesive 123 of the integrated structure can be molded by injection molding. After the battery cell 100 is placed into the packaging case 200, the tab adhesive 123 of the integrated structure can reliably wrap around the overlapping portion 124, to reduce possibility of a short circuit in the battery cell 100 caused by direct contact between the outer tab 122 or the dummy tab group 121 and the packaging case 200, thereby enhancing safety performance of the lithium-ion battery.

In some other embodiments, with reference to FIG. 6, FIG. 7, FIG. 8, and FIG. 9, the tab adhesive 123 includes a first adhesive sheet 1231 and a second adhesive sheet 1232, the first adhesive sheet 1231 and the second adhesive sheet 1232 are respectively arranged on two sides of the overlapping portion 124 along a thickness direction, and the first adhesive sheet 1231 and the second adhesive sheet 1232 are adhered to each other on two sides of the overlapping portion 124 along a width direction. The tab adhesive 123 is configured as a separate form including the first adhesive sheet 1231 and the second adhesive sheet 1232. In a manufacturing process of the battery cell 100, after the outer tab 122 is connected to the dummy tab group 121, the first adhesive sheet 1231 and the second adhesive sheet 1232 are respectively adhered to the two sides of the overlapping portion 124, and the first adhesive sheet 1231 and the second adhesive sheet 1232 are adhered to each other on the two sides of the overlapping portion 124 along the width direction, thereby forming the tab adhesive 123 wrapping around the overlapping portion 124. In this way, an assembly process becomes simple, which is conducive to improving manufacturing efficiency of the battery cell 100.

The tab adhesive 123 can alternatively be arranged at various positions, provided that at least part of the tab adhesive 123 wraps around at least part of the overlapping portion 124. Optionally, with reference to FIG. 5, FIG. 7, and FIG. 9, the tab adhesive 123 wraps around an end of the dummy tab group 121 away from the body 110. After the battery cell 100 is placed into the packaging case 200, the dummy tab group 121 does not protrude beyond the packaging case 200. This improves visual cleanliness of the lithium-ion battery, and can avoid communication between the inside and the outside of the packaging case 200 due to a gap between adjacent dummy tabs 1211, thereby enhancing sealing integrity of the packaging case 200.

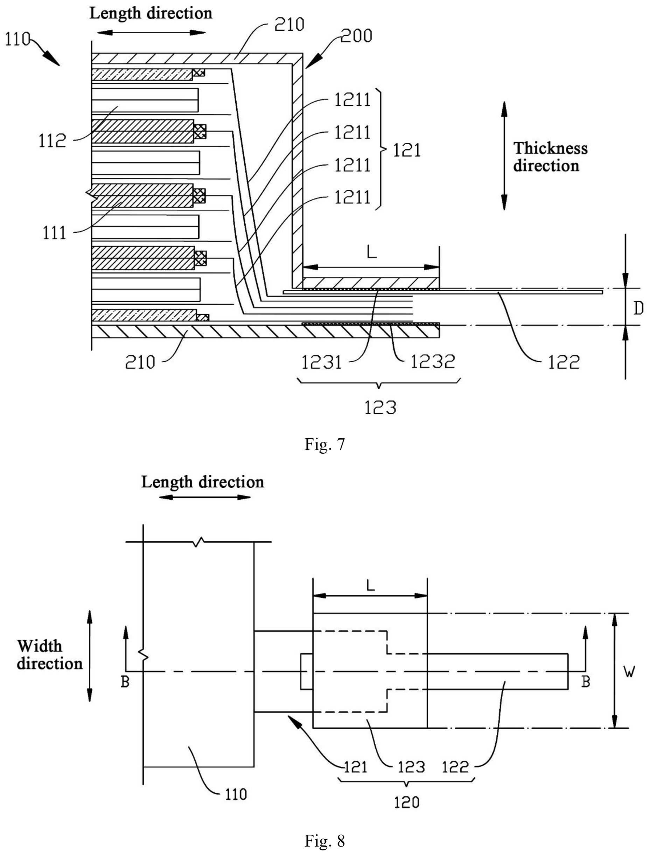

For example, in some embodiments, with reference to FIG. 4 and FIG. 5, the tab adhesive 123 of an integrated structure can be configured to wrap around the end of the dummy tab group 121 away from the body 110. In some other embodiments, with reference to FIG. 8, and FIG. 9, the tab adhesive 123 includes the first adhesive sheet 1231 and the second adhesive sheet 1232, the first adhesive sheet 1231 and the second adhesive sheet 1232 are respectively arranged on the two sides of the overlapping portion 124 along the thickness direction, and the first adhesive sheet 1231 and the second adhesive sheet 1232 are adhered to each other on the two sides of the overlapping portion 124 along the width direction. In addition, an end of the first adhesive sheet 1231 along a length direction of the overlapping portion 124 is adhered to one side of the outer tab 122 along the thickness direction of the overlapping portion 124, and an end of the second adhesive sheet 1232 along the length direction of the overlapping portion 124 is adhered to the other side of the outer tab 122 along the thickness direction of the overlapping portion 124.

Dimensions of the tab adhesive 123 along a length direction, the width direction, and the thickness direction of the body 110 can be set according to a practical requirement. For example, in some embodiments, with reference to FIG. 4 to FIG. 9, a dimension L of the tab adhesive 123 along the length direction of the body 110 can be set to be from 0.5 mm to 10 mm; a dimension W of the tab adhesive 123 along the width direction of the body 110 can be set to be from 1 mm to 25 mm; and a dimension D of the tab adhesive 123 along the thickness direction of the body 110 can be set to be from 0.002 mm to 0.5 mm.

Further, with reference to FIG. 5, FIG. 7, and FIG. 9, the dummy tab group 121 includes a plurality of dummy tabs 1211, and the plurality of dummy tabs 1211 are sequentially arranged along the thickness direction of the body 110. Configuration of the plurality of dummy tabs 1211 is conducive to reducing internal resistance of the battery cell 100 and increasing output current of the battery cell 100; The plurality of dummy tabs 1211 in the same dummy tab group 121 are sequentially arranged along the thickness direction of the body 110. Further, projections of the plurality of dummy tabs 1211 along the thickness direction of the body 110 overlap. During assembly, a clamp can be used to clamp the plurality of dummy tabs 1211 and the outer tab 122 along the thickness direction of the body 110, to ensure tight contact between the outer tab 122 and the plurality of dummy tabs 1211 along the thickness direction of the body 110, and then the outer tab 122 is welded to the plurality of dummy tabs 1211. Projections of a plurality of inner tabs 321 in a same inner tab group 320 are arranged to overlap along the thickness direction of the body 110, so that the plurality of dummy tabs 1211 in the same dummy tab group 121 can be welded to the outer tab 122 by only welding to the overlapping portion 124 once. This is conducive to simplifying manufacturing steps, which improves manufacturing efficiency.

In some embodiments, the body 110 includes a first electrode sheet 111 and a second electrode sheet 112, where a dummy tab 1211 in one dummy tab group 121 is connected to the first electrode sheet 111, and a dummy tab 1211 in another dummy tab group 121 is connected to the second electrode sheet 112. In a scheme in which the dummy tab group 121 includes a plurality of dummy tabs 1211, a plurality of dummy tabs 1211 in one dummy tab group 121 are all connected to the first electrode sheet 111, and a plurality of dummy tabs 1211 in another dummy tab group 121 are all connected to the second electrode sheet 112. The first electrode sheet 111 and the second electrode sheet 112 are laminated and wound to form a wound-structure battery cell 100, which has a simple structure that facilitates manufacturing and offers high manufacturing efficiency.

In some other embodiments, the body 110 includes a plurality of first electrode sheets 111 and a plurality of second electrode sheets 112, where a plurality of dummy tabs 1211 in one dummy tab group 121 are connected to the plurality of first electrode sheets 111 in one-to-one correspondence, and a plurality of dummy tabs 1211 in another dummy tab group 121 are connected to the plurality of second electrode sheets 112 in one-to-one correspondence. The plurality of first electrode sheets 111 and the plurality of second electrode sheets 112 are alternately laminated to form a laminated-structure battery cell 100, which has low internal resistance that facilitates high-current charging and discharging.

With reference to FIG. 10, an embodiment of the second aspect of the present disclosure provides a manufacturing method of the lithium-ion battery, used for manufacturing a lithium-ion battery including the multi-tab battery according to any embodiment of the first aspect of the present disclosure. The manufacturing method of the lithium-ion battery includes steps of:
S100: obtaining or preparing a combination of a body 110 and a dummy tab group 121;
S200: partially overlapping an outer tab 122 and the dummy tab group 121 along a thickness direction of the body 110 to form an overlapping portion 124;
S300: welding the outer tab 122 to a plurality of dummy tabs 1211 in the dummy tab group 121;
S400: preparing a tab adhesive 123 on the overlapping portion 124, to form a battery cell 100; and
S500: obtaining or preparing a packaging case 200, and placing the battery cell 100 into the packaging case 200, such that the tab adhesive 123 is sandwiched between two cases 210 of the packaging case 200.

In the manufacturing method of the lithium-ion battery according to the embodiment of the second aspect of the present disclosure, the battery cell 100 according to the embodiment of the first aspect of the present disclosure is first prepared, and the tab adhesive 123 wraps around the overlapping portion 124 formed by overlapping the outer tab 122 and the dummy tab group 121. In comparison with the related art where the tab adhesive 123 is arranged on the outer tab 122, the tab adhesive 123 in the battery cell 100 according to the embodiment of the first aspect of the present disclosure is located closer to the body 110. After the battery cell 100 is prepared, there is no need to fold the dummy tabs 1211. After the battery cell 100 is placed into the packaging case 200, manufacturing of the lithium-ion battery can be completed by directly performing a top sealing process at a position of the tab adhesive 123. In one aspect, a tab assembly 120 occupies small space between the body 110 and a top sealing area, which can increase an energy density of the lithium-ion battery. In another aspect, manufacturing steps for the lithium-ion battery are simple, which improves manufacturing efficiency of the lithium-ion battery.

Specific steps of S400 can be designed based on a structure of the tab adhesive 123. For example, in some embodiments, S400 includes a step of:
S410: after welding the outer tab 122 to the plurality of dummy tabs 1211 in the dummy tab group 121, placing the overlapping portion 124 into an injection mold, and injecting a plastic material into the injection mold and solidifying the plastic material to form the tab adhesive 123 wrapping around the overlapping portion 124, thereby forming the battery cell 100 as shown in FIG. 4 and FIG. 5.

Through step S410, the tab adhesive 123 of an integrated structure wrapping around the overlapping portion 124 can be formed. After the battery cell 100 is placed into the packaging case 200, the tab adhesive 123 of the integrated structure can reliably wrap around the overlapping portion 124, to reduce possibility of a short circuit in the battery cell 100 caused by direct contact between the outer tab 122 or the dummy tab group 121 and the packaging case 200, thereby enhancing safety performance of the lithium-ion battery.

In some other embodiments, S400 includes steps of:
S420: obtaining or preparing a first adhesive sheet 1231 and a second adhesive sheet 1232; and
S430: after welding the outer tab 122 to the plurality of dummy tabs 1211 in the dummy tab group 121, adhering the first adhesive sheet 1231 to one side of the overlapping portion 124 along a thickness direction, adhering the second adhesive sheet 1232 to the other side of the overlapping portion 124 along the thickness direction, and adhering the first adhesive sheet 1231 and the second adhesive sheet 1232 to each other on two sides of the overlapping portion 124 along a width direction, to form the battery cell 100 as shown in FIG. 6 and FIG. 7.

After the outer tab 122 is connected to the dummy tab group 121, the first adhesive sheet 1231 and the second adhesive sheet 1232 in a separate form are respectively adhered to the two sides of the overlapping portion 124 through steps S420 and S430, and the first adhesive sheet 1231 and the second adhesive sheet 1232 are adhered to each other on the two sides of the overlapping portion 124 along the width direction, thereby forming the tab adhesive 123 wrapping around the overlapping portion 124. In this way, an assembly process becomes simple, which is conducive to improving manufacturing efficiency of the battery cell 100.

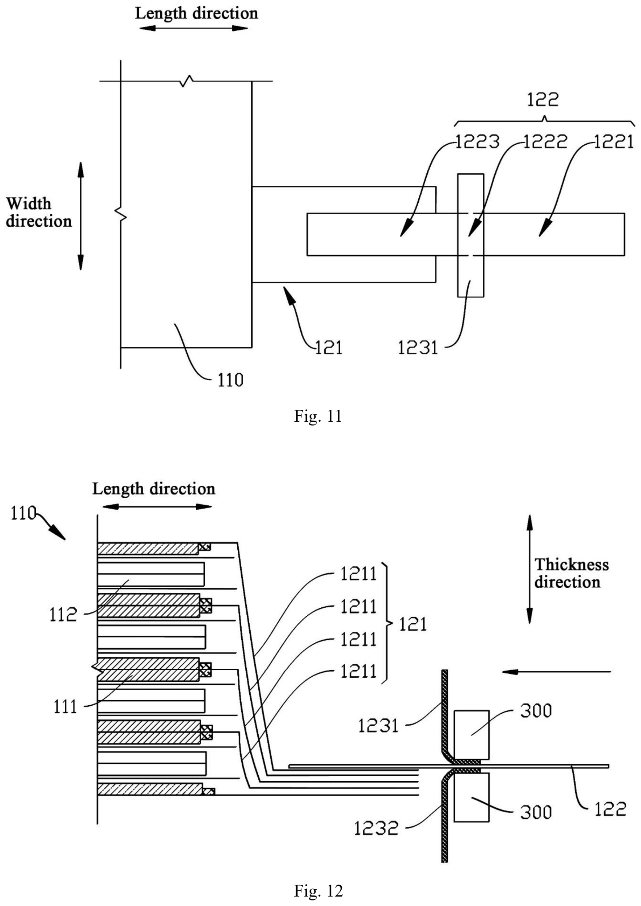

In still some embodiments, with reference to FIG. 11 and FIG. 12, the outer tab 122 includes an exposed area 1221, a pre-adhesion 1222 area, and a welding area 1223 sequentially connected along a length direction of the outer tab, S400 includes steps of:
S440: obtaining or preparing a first adhesive sheet 1231 and a second adhesive sheet 1232; and
S450: adhering one end of the first adhesive sheet 1231 to one side of the pre-adhesion area 1222 along a thickness direction, such that the remaining part of the first adhesive sheet 1231 is located on one side of the pre-adhesion area 1222 close to the welding area 1223 and separated from the welding area 1223, and adhering one end of the second adhesive sheet 1232 to the other side of the pre-adhesion area 1222 along the thickness direction, such that the remaining part of the second adhesive sheet 1232 is located on the side of the pre-adhesion area 1222 close to the welding area 1223 and separated from the welding area 1223;
S200 includes a step of: overlapping the welding area 1223 and the dummy tab group 121 along the thickness direction of the body 110, to form the overlapping portion 124; and
S300 includes steps of: welding the welding area 1223 to the plurality of dummy tabs 1211 in the dummy tab group 121; and
S460: after welding the welding area 1223 to the plurality of dummy tabs 1211 in the dummy tab group 121, adhering remaining part of the first adhesive sheet 1231 to one side of the overlapping portion 124, adhering remaining part of the second adhesive sheet 1232 to the other side of the overlapping portion 124, and adhering the first adhesive sheet 1231 and the second adhesive sheet 1232 to each other on two sides of the overlapping portion 124 along a width direction, to form the battery cell 100 as shown in FIG. 8 and FIG. 9.

Through steps S440, S450, and S460, the tab adhesive 123 can wrap around an end of the dummy tab group 121 away from the body 110. After the battery cell 100 is placed into the packaging case 200, the dummy tab group 121 does not protrude beyond the packaging case 200. This improves visual cleanliness of the lithium-ion battery, and can avoid communication between the inside and the outside of the packaging case 200 due to a gap between adjacent dummy tabs 1211, thereby enhancing sealing integrity of the packaging case 200.

Further, with reference to FIG. 12, S450 includes steps of:
S451: causing a pushing member 300 to contact one side of the first adhesive sheet 1231 away from the outer tab 122;
S452: causing the pushing member 300 to contact one side of the second adhesive sheet 1232 away from the outer tab 122; and
S453: causing the pushing member 300 to move along a direction from the pre-adhesion area 1222 toward the welding area 1223, to push the remaining part of the first adhesive sheet 1231 to be adhered to the one side of the overlapping portion 124, and push the remaining part of the second adhesive sheet 1232 to be adhered to the other side of the overlapping portion 124, and causing the first adhesive sheet 1231 and the second adhesive sheet 1232 to be adhered to each other on the two sides of the overlapping portion 124 along the width direction.

The pushing member 300 is used to push the first adhesive sheet 1231 and the second adhesive sheet 1232 to be adhered to the two sides of the overlapping portion 124 respectively, and the pushing member 300 can straighten the first adhesive sheet 1231 and the second adhesive sheet 1232 during a pushing process, to reduce possibility of wrinkles occurring in the first adhesive sheet 1231 and the second adhesive sheet 1232, thereby improving adhesion quality of the tab adhesive 123. Specifically, the pushing member 300 is a pushing block or a brush, and the pushing member 300 can be driven, by a robot arm, a motor, a cylinder, or the like, to move relative to the outer tab 122.

Further, S300 includes the following step.

The outer tab 122 is welded to the plurality of dummy tabs 1211 in the dummy tab group 121 by laser welding or ultrasonic welding.

The laser welding offers a higher speed and smaller deformation, which is conducive to improving manufacturing efficiency and welding quality, and the ultrasonic welding consumes less power, provides higher weld point strength, and has a lower requirement on surface cleanliness at a weld joint, which is conducive to reducing manufacturing costs and improving welding quality.

An embodiment of the third aspect of the present disclosure provides a lithium-ion battery, including a packaging case 200 and the battery cell 100 according to any embodiment of the first aspect of the present disclosure. The packaging case 200 includes two cases 210 that are interlocked, and an accommodation cavity is defined between the two cases 210. Specifically, in some embodiments, both cases 210 can be provided with recesses, and after the two cases 210 are interlocked, the two recesses together form the accommodation cavity. In some other embodiments, only one of the cases 210 can be provided with a recess, while the other case 210 is of a flat plate shape, the case 210 of the flat plate shape covers the case 210 with the recess, and the single recess forms the accommodation cavity. A body 110 is accommodated in the accommodation cavity, a tab adhesive 123 is sandwiched between the two cases 210, and part of an outer tab 122 extends to the outside of the packaging case 200.

The lithium-ion battery according to the embodiment of the third aspect of the present disclosure includes the battery cell 100 according to the embodiment of the first aspect of the present disclosure. In the battery cell 100, the tab adhesive 123 wraps around an overlapping portion 124 formed by overlapping the outer tab 122 and a dummy tab group 121. In comparison with the related art where the tab adhesive 123 is arranged on the outer tab 122, the tab adhesive 123 in the battery cell 100 according to the embodiment of the first aspect of the present disclosure is located closer to the body 110. In a manufacturing process of the lithium-ion battery according to the embodiment of the third aspect of the present disclosure, there is no need to fold a dummy tab 1211. After the battery cell 100 is placed into the packaging case 200, a top sealing process at a position of the tab adhesive 123 is directly performed. This can not only reduce space occupied by a tab assembly 120 between the body 110 and a top sealing area, to increase an energy density of the lithium-ion battery, but also simplify manufacturing steps for the lithium-ion battery, to improve manufacturing efficiency of the lithium-ion battery.

Although embodiments of the present disclosure are described in detail above with reference to the accompanying drawings, the present disclosure is not limited to the foregoing embodiments, and various changes can be made within the knowledge scope of a person of ordinary skill in the art without departing from the principle of the present disclosure. In addition, embodiments and features in the embodiments of the present disclosure can be mutually combined without conflict.

## Claims

1. A battery cell, **characterized by** comprising:
a body; and
a tab assembly, comprising a dummy tab group, an outer tab, and a tab adhesive, wherein the dummy tab group comprises at least one dummy tab connected to the body, the outer tab is electrically connected to the dummy tab group; in a projection along a thickness direction of the body, the outer tab and the dummy tab group partially overlap to form an overlapping portion, the tab adhesive wraps around at least part of the overlapping portion, two tab assemblies are provided, and the two tab assemblies are arranged in a staggered manner along a width direction of the body.

2. The battery cell according to claim 1, wherein the tab adhesive comprises a first adhesive sheet and a second adhesive sheet, the first adhesive sheet and the second adhesive sheet are respectively arranged on two sides of the overlapping portion along a thickness direction, and the first adhesive sheet and the second adhesive sheet are adhered to each other on two sides of the overlapping portion along a width direction.

3. The battery cell according to claim 2, wherein an end of the first adhesive sheet along a length direction of the overlapping portion is adhered to one side of the outer tab along the thickness direction of the overlapping portion, and an end of the second adhesive sheet along the length direction of the overlapping portion is adhered to the other side of the outer tab along the thickness direction of the overlapping portion.

4. The battery cell according to claim 1, wherein the tab adhesive is of an integrated structure.

5. The battery cell according to claim 1, wherein the tab adhesive wraps around an end of the dummy tab group away from the body.

6. The battery cell according to claim 1, wherein the dummy tab group comprises a plurality of dummy tabs, and the plurality of dummy tabs are sequentially arranged along the thickness direction of the body.

7. The battery cell according to claim 1 or 6, wherein the body comprises a first electrode sheet and a second electrode sheet, and the first electrode sheet and the second electrode sheet are laminated and wound, wherein the dummy tab in one dummy tab group is connected to the first electrode sheet, and the dummy tab in another dummy tab group is connected to the second electrode sheet.

8. The battery cell according to claim 6, wherein the body comprises a plurality of first electrode sheets and a plurality of second electrode sheets, and the plurality of first electrode sheets and the plurality of second electrode sheets are alternately laminated, wherein a plurality of dummy tabs in one dummy tab group are connected to the plurality of first electrode sheets in one-to-one correspondence, and a plurality of dummy tabs in another dummy tab group are connected to the plurality of second electrode sheets in one-to-one correspondence.

9. The battery cell according to claim 1, wherein a dimension of the tab adhesive along a length direction of the body is from 0.5 mm to 10 mm;
and/or
a dimension of the tab adhesive along the width direction of the body is from 1 mm to 25 mm;
and/or
a dimension of the tab adhesive along the thickness direction of the body is from 0.002 mm to 0.5 mm.

10. A manufacturing method of a lithium-ion battery, **characterized in that** used for manufacturing a lithium-ion battery comprising the battery cell according to any one of claims 1 to 9, wherein the manufacturing method of the lithium-ion battery comprises steps of:
obtaining or preparing a combination of a body and a dummy tab group;
partially overlapping an outer tab and the dummy tab group along a thickness direction of the body to form the overlapping portion;
welding the outer tab to a plurality of dummy tabs in the dummy tab group;
preparing a tab adhesive on the overlapping portion, to form the battery cell; and
obtaining or preparing a packaging case, and placing the battery cell into the packaging case, such that the tab adhesive is sandwiched between two cases of the packaging case.

11. The manufacturing method of the lithium-ion battery according to claim 10, wherein preparing a tab adhesive on the overlapping portion comprises a step of:
after welding the outer tab to the plurality of dummy tabs in the dummy tab group, placing the overlapping portion into an injection mold, and injecting a plastic material into the injection mold and solidifying the plastic material to form the tab adhesive wrapping around the overlapping portion.

12. The manufacturing method of the lithium-ion battery according to claim 10, wherein preparing a tab adhesive on the overlapping portion comprises steps of:
obtaining or preparing a first adhesive sheet and a second adhesive sheet; and
after welding the outer tab to the plurality of dummy tabs in the dummy tab group, adhering the first adhesive sheet to one side of the overlapping portion along a thickness direction, adhering the second adhesive sheet to the other side of the overlapping portion along the thickness direction, and adhering the first adhesive sheet and the second adhesive sheet to each other on two sides of the overlapping portion along a width direction.

13. The manufacturing method of the lithium-ion battery according to claim 10, wherein preparing a tab adhesive on the overlapping portion comprises steps of:
obtaining or preparing a first adhesive sheet and a second adhesive sheet;
the outer tab comprises an exposed area, a pre-adhesion area, and a welding area sequentially connected along a length direction of the outer tab, adhering one end of the first adhesive sheet to one side of the pre-adhesion area along a thickness direction, such that the remaining part of the first adhesive sheet is located on one side of the pre-adhesion area close to the welding area and separated from the welding area, and adhering one end of the second adhesive sheet to the other side of the pre-adhesion area along the thickness direction, such that the remaining part of the second adhesive sheet is located on the side of the pre-adhesion area close to the welding area and separated from the welding area;
partially overlapping an outer tab and the dummy tab group along a thickness direction of the body to form an overlapping portion comprises a step of: overlapping the welding area and the dummy tab group along the thickness direction of the body to form the overlapping portion;
welding the outer tab to a plurality of dummy tabs in the dummy tab group comprises steps of: welding the welding area to the plurality of dummy tabs in the dummy tab group; and
after welding the welding area to the plurality of dummy tabs in the dummy tab group, adhering remaining part of the first adhesive sheet to one side of the overlapping portion, adhering remaining part of the second adhesive sheet to the other side of the overlapping portion, and adhering the first adhesive sheet and the second adhesive sheet to each other on two sides of the overlapping portion along a width direction.

14. The manufacturing method of the lithium-ion battery according to claim 13, adhering remaining part of the first adhesive sheet to one side of the overlapping portion, adhering remaining part of the second adhesive sheet to the other side of the overlapping portion, and adhering the first adhesive sheet and the second adhesive sheet to each other on two sides of the overlapping portion along a width direction comprises steps of:
causing a pushing member to contact one side of the first adhesive sheet away from the outer tab;
causing the pushing member to contact one side of the second adhesive sheet away from the outer tab; and
causing the pushing member to move along a direction from the pre-adhesion area toward the welding area, to push the remaining part of the first adhesive sheet to be adhered to the one side of the overlapping portion, and push the remaining part of the second adhesive sheet to be adhered to the other side of the overlapping portion, and causing the first adhesive sheet and the second adhesive sheet to be adhered to each other on the two sides of the overlapping portion along the width direction.

15. The manufacturing method of the lithium-ion battery according to claim 10, welding the outer tab to a plurality of dummy tabs in the dummy tab group comprises a step of:
welding the outer tab to the plurality of dummy tabs in the dummy tab group by laser welding or ultrasonic welding.

16. A lithium-ion battery, **characterized by** comprising:
a packaging case, comprising two cases that are interlocked, wherein the two cases define an accommodation cavity; and
the battery cell according to any one of claims 1 to 9, wherein the body is accommodated in the accommodation cavity, the tab adhesive is sandwiched between the two cases, and a part of the outer tab extends to the outside of the packaging case.
